# EUROPEAN PATENT SPECIFICATION

(11) **EP 1 578 871 B1**
(45) Date of publication and mention of the grant of the patent: **07.03.2007**
(21) Application number: 03778656.3
(22) Date of filing: 18.12.2003
(51) Int. Cl.: C09B 7/00

(54) **DYE COMPOSITIONS FOR DYEING OR PRINTING OF FIBRE PRODUCTS COMPRISING CELLULOSE ACETATE**
FARBSTOFFMISCHUNGEN ZUM FÄRBEN ODER DRUCKEN VON FASERMATERIALIEN DIE CELLULOSEACETAT ENTHALTEN
COMPOSITIONS COLORANTES DESTINEES A LA COLORATION OU A L'IMPRESSION DE PRODUITS FIBREUX COMPRENANT DE L'ACETO-CELLULOSE

(30) Priority: 20.12.2002 EP 02406130; 12.03.2003 EP 03005612
(43) Date of publication of application: 28.09.2005
(73) Proprietor: Clariant Finance (BVI) Limited, Road Town, Tortola (VG)
(72) Inventor: SIEBER, Helmut, 79618 Rheinfelden (DE)
(74) Representative: Herrmann, Jörg
(86) International application number: PCT/IB2003/006147
(87) International publication number: WO 2004/056925

(56) References cited:
- EP-A- 0 347 685
- EP-A- 0 678 560
- WO-A-00/43454
- DE-A- 4 304 744
- GB-A- 2 346 150

## Description

The present invention relates to mixtures of dyes, their preparation and their use for dyeing or printing fibre materials which comprise polyester.

Dyes and dye mixtures for dyeing polyester are known. Similarly, dyes and dye mixtures for dyeing semisynthetic or synthetic hydrophobic fibre materials which comprise cellulose acetate such as for example cellulose secondary acetate and cellulose triacetate are known. Cellulose secondary acetate means partially esterified cellulose having from 2 to 2,5 acetyl groups per anhydroglucose unit which is also known as 2½-acetate or 2½-celluloseacetate or cellulose-2½-acetate respectively.

Thus, it has been determined that these dyes or their mixtures do not always fully meet the highest requirements, especially with regard to reproducibility, sensitivity to dyebath temperature or the suitability for specific dyeing processes, especially in relation to the use of a jigger or jet dyeing machine.

Moreover, dyes which dye polyester effectively often do not go readily onto cellulose secondary acetate or cellulose triacetate fibres. On the other hand, dyes which dye cellulose secondary acetate or cellulose triacetate fibres effectively do not often go readily onto polyester.

EP347685 discloses mixtures of blue disperse dyes which leave accompanying fibres fibers, like wool, cotton or regenerated cellulose other than made of polyester un-dyed or even un-soiled.

GB2346150 discloses disperse dye mixtures and their use of these mixtures for dyeing or printing semisynthetic hydrophobic cellulose acetate-containing fibre materials. These mixtures do not stain wool or cotton if present in blends with cellulose acetate.

In addition, certain dyes which are suitable for acetate fibres exhibit a considerable temperature sensitivity, so that a poor appearance or depth of shade likewise results when the temperature distribution in the dyeing liquor is not uniform.

C.I. Disperse Blue 183 and its derivatives cannot be dyed onto cellulose acetate and barely give uniform dyeings when exhaust-dyed onto polyester.

There is therefore a need for novel dyes or dye mixtures which do not have these disadvantages and yet lead to dyeings having a hue angle (hue as defined in DIN 5033-1: 1979-03) of 295 to 305° (preferably 298 to 302°) at a 1/1 standard depth of shade on polyester (as defined in DIN 5033 Part 3) and the same or substantially the same hue as C.I. Disperse Blue 183 coupled with the same or superior fastnesses.

It has now been found that, surprisingly, the mixtures according to the invention substantially fulfil the above-indicated criteria, whereas the properties of the individual dyes fulfil these criteria only insufficiently, if at all.

The present invention accordingly provides a dye mixture containing at least one dye of the formulae (1') 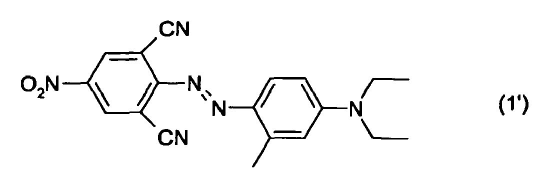 and at least one dye of the formula (2')

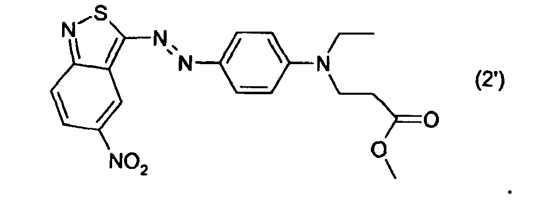

The present invention thus provides a dye mixture which leads to dyeings having a hue angle (DIN 5033-1: 1979-03)) of 295 to 305° (and preferably 298 to 302°) at a 1/1 standard depth of shade on polyester (as defined in DIN 5033 Part 3) and the same or substantially the same hue as C.I. Disperse Blue 183 at similar or superior fastnesses, characterized in that they contain at least one dyes of the formulae (1') 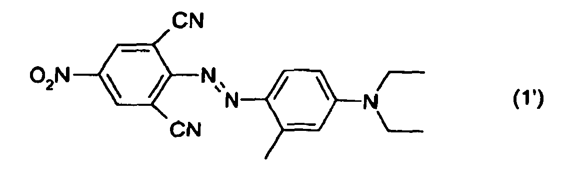 and at least one dye of the formula (2')

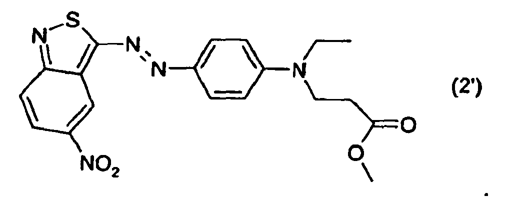

The preferred dye mixtures contain up to 60% of a dye as per the formula (1') based on the sum total of dyes (1') and (2'). Particularly preferred dye mixture contain up to 50% of a dye as per the formula (1') based on the sum total of dyes (1') and (2'). In very particularly preferred dye mixtures the ratio between (1) and (2) is 0.9 to 1.1 : 1.8 to 2.2, ie. around 1:2. The proportion of (2') can be up to 99% based on the sum total of dyes (1') and (2'), in preferred cases up to 95% based the sum total of dyes (1') and (2').

The dye mixtures of the invention may contain further disperse dyes which serve to shade the dye mixture, in an amount of up to 5% by weight These "shading dyes" can be added by customary mixing.

The dye mixtures according to the invention may contain further disperse dyes, even in an amount of more than 5% by weight. These dye mixtures too are preparable by customary mixing, so that deep blue, brown and black dyeings are preparable on, inter alia, polyester and/or cellulose acetate fibre materials for example.

Deep blue, brown and black dyeings (for example on polyester and/or on cellulose acetate materials and/or fibre materials which may consist of blends of polyester and/or on cellulose acetate fibre materials) are readily obtainable with the abovementioned dye mixtures comprising at least two dyes of the formulae (1') and formula (2') together with at least one disperse dye selected from a yellow, red and/or orange disperse dye.

As orange, yellow or red component it is possible to use any orange, yellow or red disperse dye as long as it is compatible with the mixture according to the invention. These orange, yellow or red components may also be mixtures of different yellow, red and/or orange disperse dyes as long these mixtures are compatible with the mixture according to the invention.

The invention further provides a mixture which contains at least one dye of the formula (1'), at least one dye (2') and at least one of the following dyes of the formula (3) or (4) or (5) or (6) or (7) or (8) or (9) or (10) or (11) or (12): 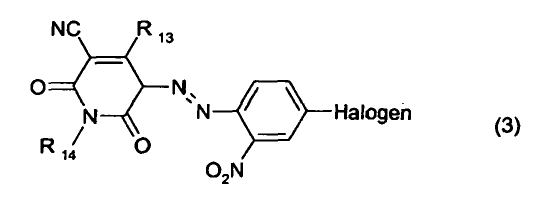 where
R₁₃ is C₁-C₄-alkyl, R₁₄ is C₁-C₄-alkyl and Halogen denotes the halogen atoms, 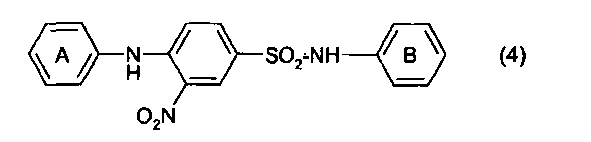 where the rings A and B may be further substituted, 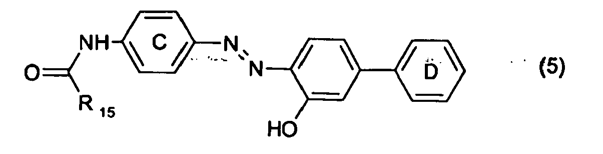 where
R₁₅ is C₁-C₄-alkyl and the rings C and D may be further substituted, 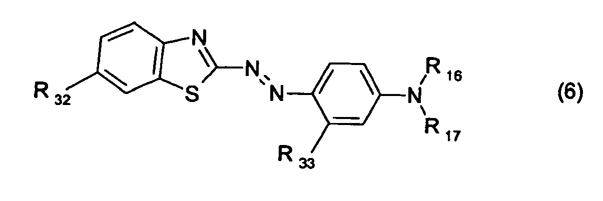 where
R₁₆ is unsubstituted or hydroxyl- or cyano-substituted C₁-C₄-alkyl, R₁₇ is unsubstituted C₁-C₄-alkyl or C₁-C₄-alkyl which is substituted by the radical -O-COR₁₈, where R₁₈ is C₁-C₄-alkyl, R₃₂ is nitro, C₁-C₄-alkoxy or the radical -SO₂CH₃ and R₃₃ is hydrogen or C₁-C₄-alkyl, 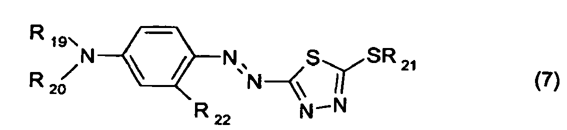 where
R₁₉ is C₁-C₄-alkyl, R₂₀ is C₁-C₄-alkyl, R₂₁ is C₁-C₄-alkyl and R₂₂ is C₁-C₄-alkyl or the radical -NHCOR₂₃, where R₂₃ is C₁-C₄-alkyl, 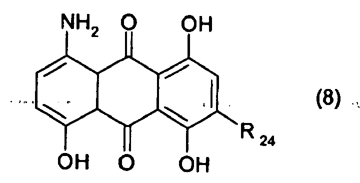 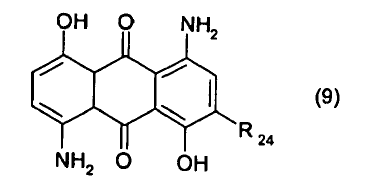 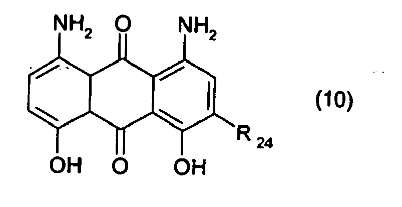 where R₂₄ is halogen, 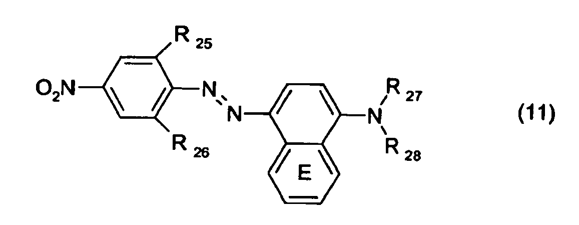 where
R₂₅ is cyano, nitro or halogen, R₂₆ is halogen, R₂₇ is unsubstituted or hydroxyl-substituted C₁-C₄-alkyl and R₂₈ is unsubstituted or hydroxyl-substituted C₁-C₄-alkyl and the naphthyl ring E may be further substituted, and/or 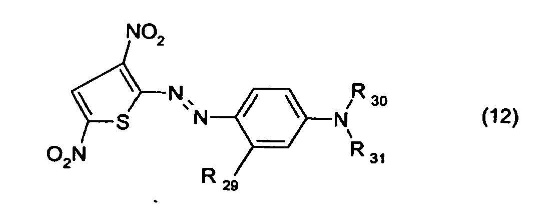 where
R₂₉ is C₁-C₄-alkyl or the radical NHCOR₁₇, where R₁₇ is C₁-C₄-alkyl, R₂₇ is C₁-C₄-alkyl or C₁-C₄-alkylcarbonyloxy-C₁-C₄-alkyl and R₃₁ is C₁-C₄-alkyl or C₁-C₄-alkylcarbonyloxy-C₁-C₄-alkyl.
C₁-C₄-Alkyl as such and as a radical in C₁-C₄-alkylcarbonylamino or C₁-C₄-alkylcarbonyloxy is methyl, ethyl, propyl, isopropyl, n = butyl, isobutyl, sec-butyl or tert-butyl.
C₁-C₄-Alkoxy as such or as a radical in C₁-C₄-alkoxycarbonyl is for example methoxy, ethoxy, propoxy or butoxy.
R₁, R₃, R₂₅ and R₂₆ as halogen are for example bromine or preferably chlorine.
R₂ and R₂₄ as halogen are for example chlorine or preferably bromine.
Halogen in the formula (3) is for example bromine or preferably chlorine.
R₅, R₆ and R₁₆ as C₁-C₄-alkyl are propyl or isopropyl and in particular ethyl.
R₁₃, R₁₅, R₁₈, R₂₂, R₂₃, R₈, R₃₁ and R₃₃ as C₁-C₄-alkyl are preferably ethyl and especially methyl.
R₁₄, R₁₉, R₂₁, R₁₁, R₃₀ and R₂₅ as C₁-C₄-alkyl are preferably methyl and especially ethyl. R₁₉, R₂₀, R₂₇, and R₂₈ as C₁-C₄-alkyl are preferably ethyl and especially propyl.
R₃₀ and R₃₁ are preferably C₁-C₄-alkyl.
R₂₆ is preferably nitro or the radical -SO₂CH₃.

The C₁-C₄-alkyl radicals are generally 1- or 2-tuply substituted with the aforementioned substituents.

The rings A to E may each be independently substituted for example by C₁-C₄-alkyl, C₁-C₄-alkoxy, halogen, nitro, cyano or acylamino.

Preferred mixtures are mixture which contains at least one dye of the formula (1'), at least one dye (2') and at least one one of the following dyes: 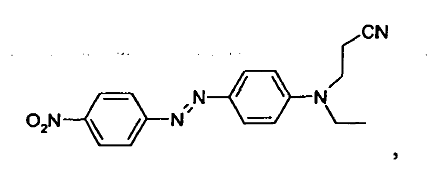 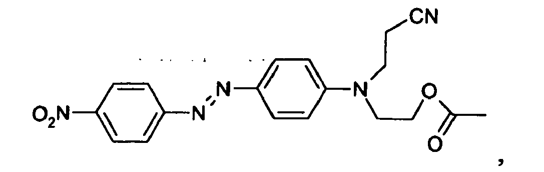 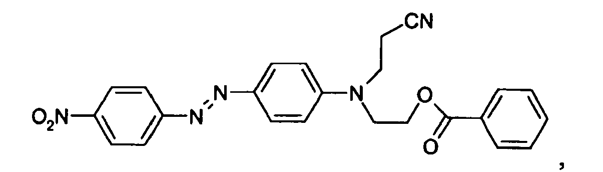 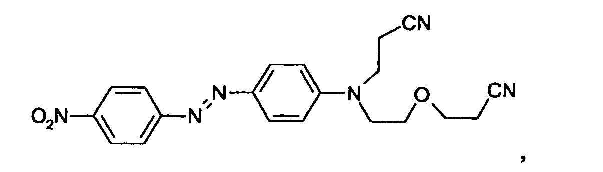 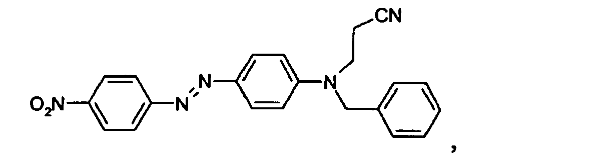 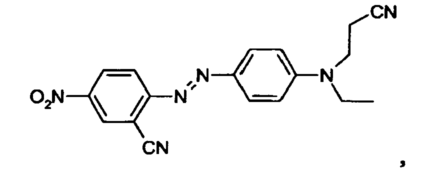 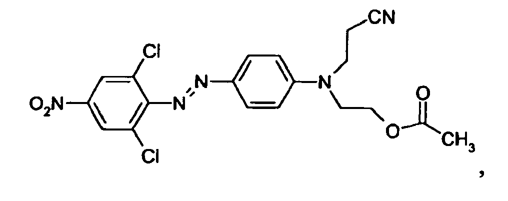 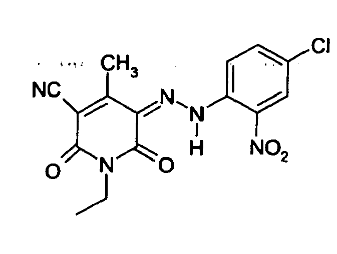 or 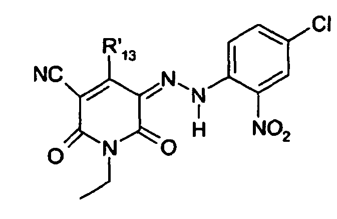 where R'₁₃ is C₂ to C₄ alkyl.

The preparation of the abovementioned dyes is known.

The dye mixtures of the invention can be used as dyes for dyeing and printing polyester fibre materials, especially textile materials. These fibre materials may additionally contain semisynthetic hydrophobic and/or cellulose acetate fibres such as for example viscose or polyamide. Textile materials composed of blend fabrics which contain semisynthetic or hydrophobic cellulose acetate textile materials and for example viscose or polyamide are likewise dyeable or printable with the aid of the dye mixtures according to the invention.

As semisynthetic hydrophobic textile materials comprising polyester it is possible to use in particular cellulose secondary acetate and cellulose triacetate and cellulose acetate.

The application to textile materials of the compounds according to the invention is effected according to known dyeing processes. For example, cellulose secondary acetate is preferably dyed between about 65 to 95°C and cellulose triacetate at temperatures between 65 and 130°C and especially between 90 and 125°C. Pure polyester fibre materials are dyeable at temperatures up to 130°.

The dye mixtures according to the invention dye adjacent wool and cotton only minimally, if at all, i.e. exhibit a very good wool and cotton reserve, so that they may also be used to good effect for dyeing cellulose acetate-wool and cellulose acetate-cellulose blend fabrics or polyester alone.

The dye mixtures according to the invention are useful for dyeing by the thermosol process, in the exhaust process, pad-steam, pad-roll and pad-jig processes and for printing processes. Here printing processes, as well as the classic processes such as roller printing and/or screen and transfer printing, also comprehends the ink jet printing processes such as the Ink Jet, Bubble Jet, Compound Jet, Dry Ink Jet or Hotmelt Ink Jet process.

The textile material mentioned may be present in the various processing forms, for example as a fibre, thread or web, as a woven fabric or as a loop-formingly knitted fabric.

It is advantageous to convert the dye mixtures according to the invention into a dye formulation before use. To this end, the dye mixture is ground so that its particle size is between 0.1 and 10 microns. The grinding may preferably be effected in the presence of dispersants. For example, the dried dye mixture is ground with one or more dispersants or kneaded in paste form with one or more dispersants and then vacuum or spray dried. The formulations thus obtained can be used to prepare print pastes and dyebaths on addition of water. Useful dispersants include the dispersants generally customary for dyeing with disperse dyes. These are for example those which are mentioned in EP-A-0 280 654 page 5 lines 40 to 56 as dispersing agents. This can be for example the sodium salt of a lignin sulphonate or the sodium salt of a further lignin sulphonate which is obtainable from the reaction of lignin with disodium sulphite and formaldehyde.

The dyes, however, can also be formulated alone as described above and then be converted into the corresponding dye formulations in a simple mixing operation.

The amount of the dispersant or dispersants in the dye formulation can be between 0% and 75% by weight, based on the weight of the dye formulation.

The amount of the dye mixtures in the dyeing liquor depends on the shade desired; amounts which will generally prove useful range from 0.01 to 15, especially from 0.02 to 10 and in particular from 0.1 to 5 per cent by weight, based on the weight of the fibre material to be dyed.

The dyeing liquors may also contain further additives, for example dyeing assistants, wetting agents and defoamers.

The dyeing liquors may further contain mineral acids, such as for example sulphuric acid or phosphoric acid, especially organic acids, such as for example formic acid or acetic acid and/or salts, such as ammonium acetate or sodium sulphate. The acids serve in particular to set the pH of the dyeing liquors, which is preferably between 4 and 7.

Printing utilizes the customary thickeners, for example modified or non-modified natural products, for example alginates, British gum, gum arabic, crystal gum, carob bean flour, tragacanth, carboxymethylcellulose, hydroxyethylcellulose, starch or synthetic products, for example polyacrylamides, polyacrylic acid or copolymers thereof or polyvinyl alcohols.

The dye mixtures according to the invention endow the materials mentioned, especially cellulose secondary acetate and cellulose triacetate, with level hues having very good service fastnesses, such as in particular good light fastness, fastness to heat setting and pleating, chlorine and wet fastness such as fastness to water, perspiration and washing; the dyeings are further characterized by very good rub fastness. The dye mixtures according to the invention are further notable for the good colour yield and good buildup.

The dye mixtures according to the invention are also very useful for producing combination shades together with other dyes.

The dye mixtures according to the invention are also very useful for dyeing hydrophobic textile material from supercritical CO₂.

The aforementioned use of the dye mixtures according to the invention constitutes as much a part of the subject-matter of the present invention as a process for dyeing or printing polyester and/or semisynthetic hydrophobic cellulose acetate fibre material, especially textile material composed of cellulose secondary acetate, cellulose triacetate and polyester, which consists in the dye mixture according to the invention being applied to the material mentioned or incorporated therein. Further substrates which are treatable by the process according to the invention and also preferred process conditions are to be found above in connection with the more particular description of the use of the dye mixtures according to the invention. The dye mixtures used according to the invention are subject to the definitions and preferences indicated above for the dyes and dye mixtures.

The present invention further provides the polyester, semisynthetic, cellulose acetate hydrophobic fibre material dyed or printed by the process mentioned, preferably textile material composed of cellulose secondary acetate, cellulose triacetate and polyester.

The examples which follow serve to illustrate the invention.

### Example 1

A mixture of the dyes (1') and (2') consisting of 12.5 parts of the dye (1') and 26.25 parts of the dye (2') (the remainder (ad 100 parts) consists of a commercially available dispersant based on lignin sulphonate) was used for dyeing cellulose secondary acetate in a dyebath which had a temperature distribution from 90 to 110°C. After the cellulose secondary acetate textile piece had been reduction cleared by the usual method (see Example 4), a brilliantly blue cellulose secondary acetate fabric which had good perspiration fastness and good light fastnesses and had been dyed at level was obtained.

### Example 2

Example 1 was repeated, except that the temperature was maintained at 100°C in the entire dyebath. The result was similar to that of Example 1.

### Example 3

Cellulose secondary acetate fabric was dyed in a dyebath with the following dye mixture under the usual conditions: 4.5 parts of dye (1'), 18 parts of dye (2'), 3 parts of the following dye: 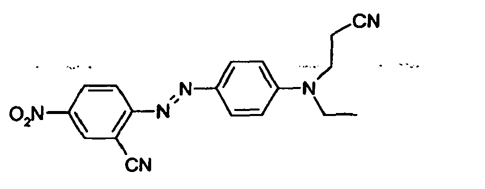 and 22 parts of the following dye: 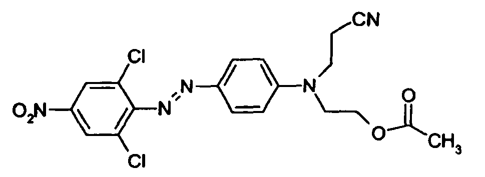 (the remainder (ad 100 parts) consists of a commercially available dispersant based on lignin sulphonate)

After the usual reduction clearing (see Example 4) a fabric which had been dyed a level deep black and had good fastnesses was obtained

### Example 4

A mixture from of dyes as per Example 1 was used for dyeing polyester according to the HT process. To this end, the dyebath at 60°C was admixed with the customary dyeing chemicals and after 10 minutes heated to 130°C at a rate of 1.5°C per minute. The dyebath is held at 130°C for 10 minutes. Thereafter, the bath is cooled down and the textile material is rinsed cold and hot and reduction cleared with a mixture of 3 g/l hydrosulphite, 2.5 g/l of solid NaOH (6 ml/l NaOH 36°Be), 0.5 ml/l of Ekaline F Liquid, then again rinsed cold and hot. The polyester fabric obtained had been dyed a level brilliant blue and possessed good perspiration fastness and good light fastnesses.

## Claims

1. Dye mixtures comprising at least one dye of the formula (1') 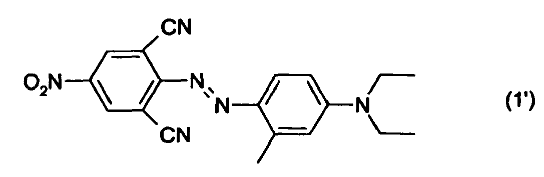 and at least one dye of the formula (2')

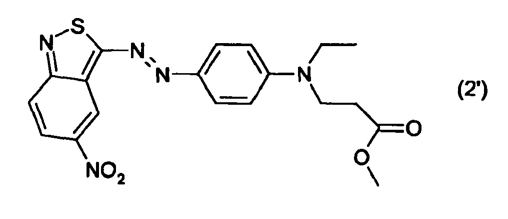

2. Dye mixtures as per Claim 1, **characterized in that** they contain up to 60% of a dye as per the formula (1) based on the sum total of the dyes (1) and (2).

3. Dye mixture as per Claim 1 **characterized in that** it contains at least one further one of the following dyes: 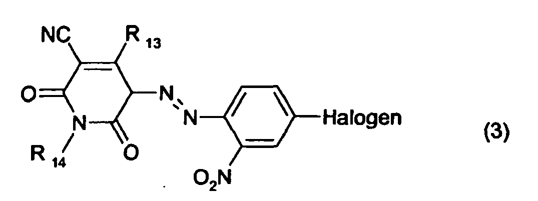 where
R₁₃ is C₁-C₄-alkyl, R₁₄ is C₁-C₄-alkyl and Halogen denotes the halogen atoms, 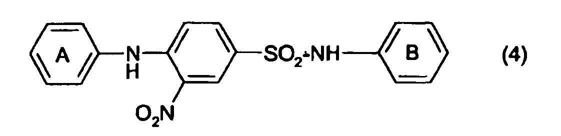 where the rings A and B may be further substituted, 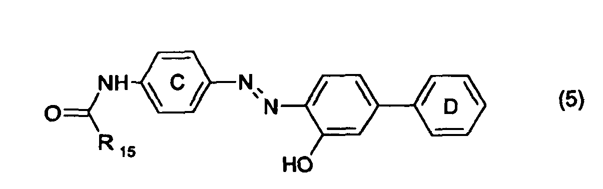 where
R₁₅ is C₁-C₄-alkyl and the rings C and D may be further substituted, 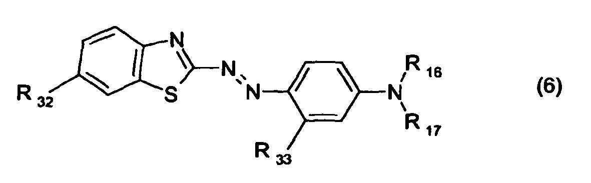 where
R₁₆ is unsubstituted or hydroxyl- or cyano-substituted C₁-C₄-alkyl, R₁₇ is unsubstituted C₁-C₄-alkyl or C₁-C₄-alkyl which is substituted by the radical -O-COR₁₈, where R₁₈ is C₁-C₄-alkyl, R₃₂ is nitro, C₁-C₄-alkoxy or the radical -SO₂CH₃ and R₃₃ is hydrogen or C₁-C₄-alkyl, 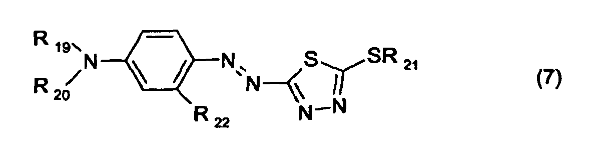 where
R₁₉ is C₁-C₄-alkyl, R₂₀ is C₁-C₄-alkyl, R₂₁ is C₁-C₄-alkyl and R₂₂ is C₁-C₄-alkyl or the radical -NHCOR₂₃, where R₂₃ is C₁-C₄-alkyl, 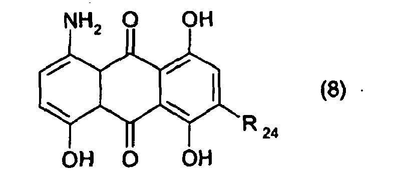 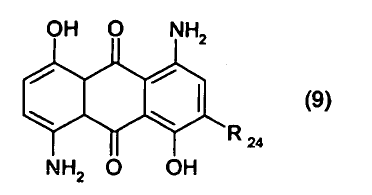 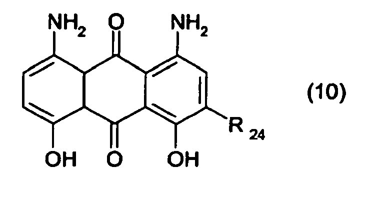 where R₂₄ is halogen, 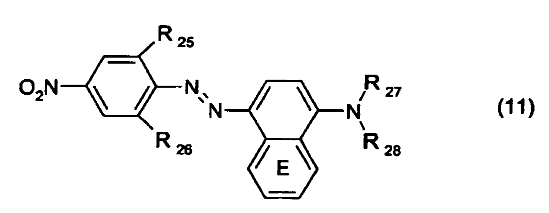 where
R₂₅ is cyano, nitro or halogen, R₂₆ is halogen, R₂₇ is unsubstituted or hydroxyl-substituted C₁-C₄-alkyl and R₂₈ is unsubstituted or hydroxyl-substituted C₁-C₄-alkyl and the naphthyl ring E may be further substituted,
and/or 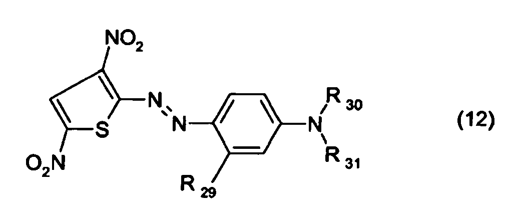 where
R₂₉ is C₁-C₄-alkyl or the radical NHCOR₁₇, where R₁₇ is C₁-C₄-alkyl, R₂₇ is C₁-C₄-alkyl or C₁-C₄-alkylcarbonyloxy-C₁-C₄-alkyl and R₃₁ is C₁-C₄-alkyl or C₁-C₄-alkylcarbonyloxy-C₁-C₄-alkyl

4. Use of dye mixtures as per Claim 1 for dyeing or printing semisynthetic or synthetic hydrophobic fibre materials comprising cellulose acetate.

5. Use of dye mixtures as per Claim 1 for dyeing or printing fibrous structures comprising polyester and/or cellulose secondary acetate.

6. Fibrous structures dyed or printed with a dye mixture as per Claim 1.

## Patentansprüche

1. Farbstoffmischungen, enthaltend mindestens einen Farbstoff der Formel (1') 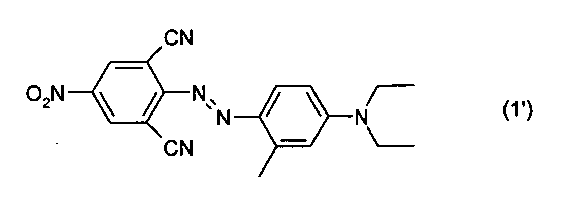 und mindestens einen Farbstoff der Formel (2')

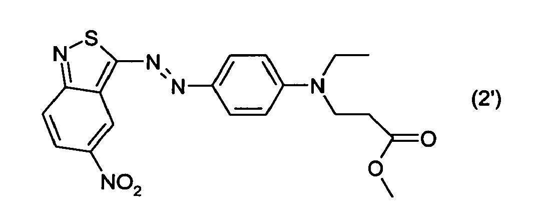

2. Farbstoffmischungen gemäss Anspruch 1, **dadurch gekennzeichnet, dass** sie bezogen auf die Summe der Farbstoffe (1) und (2) aus bis zu 60% eines Farbstoffes gemäss der Formel (1) bestehen.

3. Farbstoffmischung gemäss Anspruch 1, **dadurch gekennzeichnet, dass** sie mindestens einen weiteren der folgenden Farbstoffe enthält: 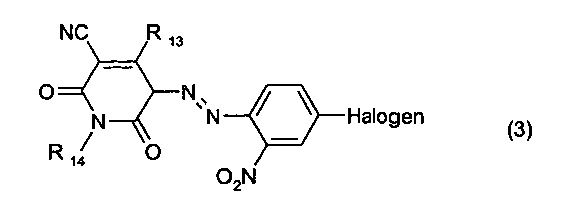 wobei
R₁₃ C₁-C₄-Alkyl, R₁₄ C₁-C₄-Alkyl und Halogen die Halogenatome bedeuten, 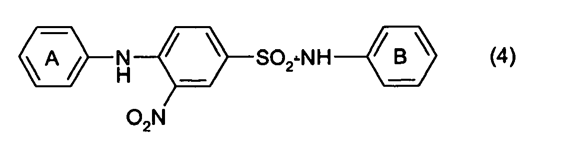 wobei die Ringe A und B weiter substituiert sein können, 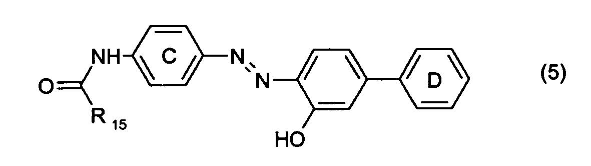 wobei
R₁₅ C₁-C₄-Alkyl ist und die Ringe C und D weiter substituiert sein können, 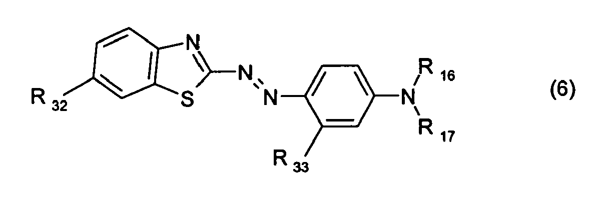 wobei
R₁₆ unsubstituiertes oder durch Hydroxy oder Cyano substituiertes C₁-C₄-Alkyl, R₁₇ unsubstituiertes oder durch den Rest -O-COR₁₈ substituiertes C₁-C₄-Alkyl mit R₁₈ in der Bedeutung C₁-C₄-Alkyl, R₃₂ Nitro, C₁-C₄-Alkoxy oder der Rest -SO₂CH₃ und R₃₃ Wasserstoff oder C₁-C₄-Alkyl sind, 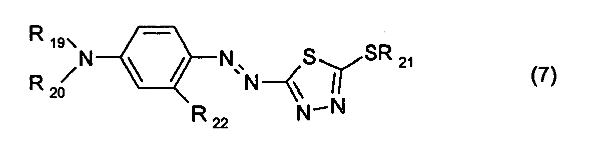 wobei
R₁₉ C₁-C₄-Alkyl, R₂₀ C₁-C₄-Alkyl, R₂₁ C₁-C₄-Alkyl und R₂₂ C₁-C₄-Alkyl oder den Rest -NHCOR₂₃ mit R₂₃ in der Bedeutung C₁-C₄-Alkyl bedeuten, 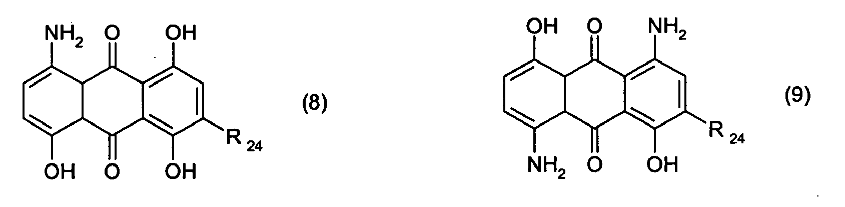 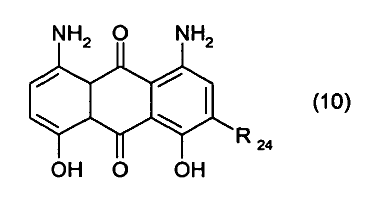 wobei R₂₄ Halogen ist, 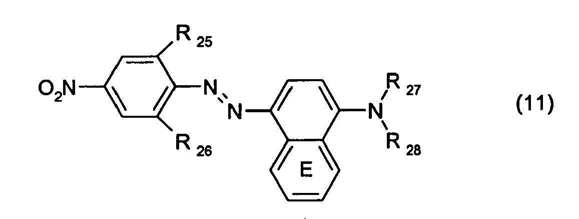 wobei
R₂₅ Cyano, Nitro oder Halogen, R₂₆ Halogen, R₂₇ unsubstituiertes oder durch Hydroxy substituiertes C₁-C₄-Alkyl und R₂₈ unsubstituiertes oder durch Hydroxy substituiertes C₁-C₄-Alkyl sind und der Naphthylring E weiter substituiert sein kann,
und/oder 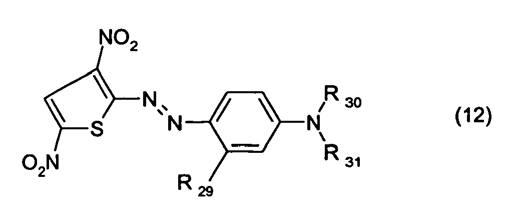 wobei
R₂₉ C₁-C₄-Alkyl oder den Rest NHCOR₁₇ mit R₁₇ in der Bedeutung C₁-C₄-alkyl, R₂₇ C₁-C₄-Alkyl oder C₁-C₄-Alkylcarbonyloxy-C₁-C₄-alkyl und R₃₁ C₁-C₄-Alkyl oder C₁-C₄-Alkylcarbonyloxy-C₁-C₄-alkyl bedeuten.

4. Verwendung von Farbstoffmischungen gemäss Anspruch 1 zum Färben oder Bedrucken von halbsynthetischen oder synthetischen hydrophoben Celluloseacetat enthaltenden Fasermaterialien.

5. Verwendung von Farbstoffinischungen gemäss Anspruch 1 zum Färben oder Bedrucken von Polyester und/oder Cellulose-2½-Acetat enthaltenden Fasergebilden.

6. Fasergebilde, gefärbt oder bedruckt mit einer Farbstoffmischung gemäss Anspruch 1.

## Revendications

1. Mélanges de colorants comprenant au moins un colorant de formule (1') 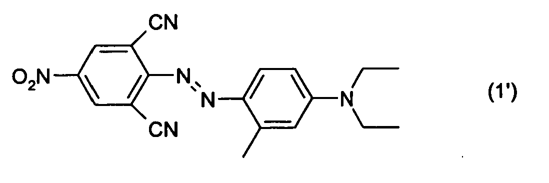 et au moins un colorant de formule (2')

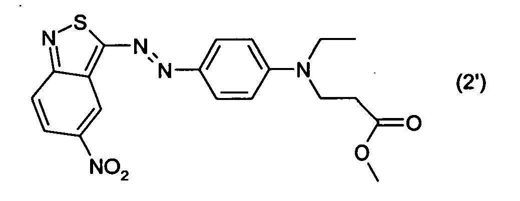

2. Mélanges de colorants selon la Revendication 1, **caractérisés en ce qu'**ils contiennent jusqu'à 60 % d'un colorant de formule (1) par rapport à la somme des quantités des colorants (1) et (2).

3. Mélange de colorants selon la Revendication 1, **caractérisé en ce qu'**il contient de plus au moins l'un des colorants suivants : 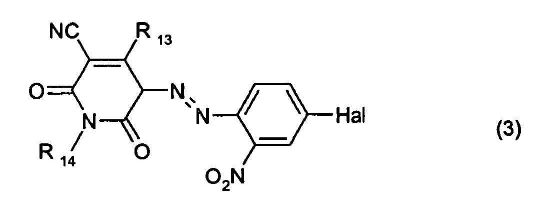 où
R₁₃ représente un groupement alkyle en C₁-C₄, R₁₄ représente un groupement alkyle en C₁-C₄ et Hal désigne un atome d'halogène quelconque, 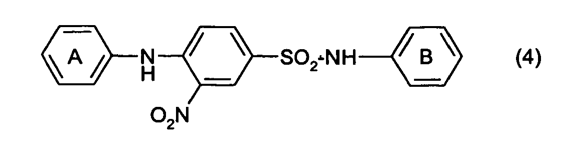 où les cycles A et B peuvent être substitués plus avant, 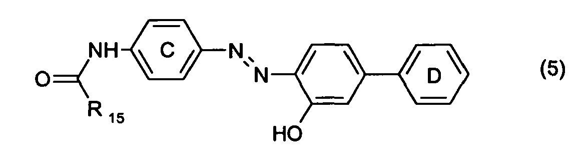 où
R₁₅ représente un groupement alkyle en C₁-C₄ et où les cycles C et D peuvent être substitués plus avant, 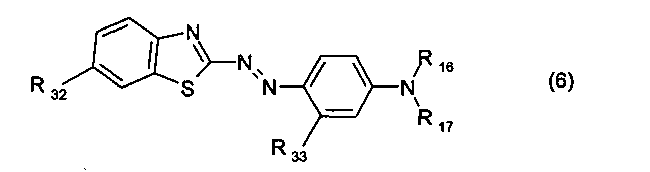 où
R₁₆ représente un groupement alkyle en C₁-C₄ non substitué ou substitué par un groupement hydroxy ou cyano, R₁₇ représente un groupement alkyle en C₁-C₄ non substitué ou substitué par le radical -O-COR₁₈, où R₁₈ représente un groupement alkyle en C₁-C₄, R₃₂ représente un groupement nitro, un groupement alkoxy en C₁-C₄ ou le radical -SO₂CH₃ et R₃₃ représente un atome d'hydrogène ou un groupement alkyle en C₁-C₄, 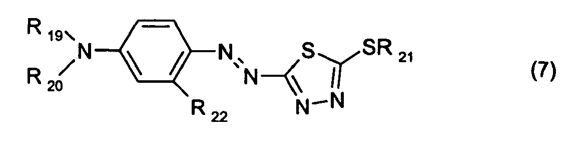 où
R₁₉ représente un groupement alkyle en C₁-C₄, R₂₀ représente un groupement alkyle en C₁-C₄, R₂₁ représente un groupement alkyle en C₁-C₄ et R₂₂ représente un groupement alkyle en C₁-C₄ ou le radical NHCOR₂₃, où R₂₃ représente un groupement alkyle en C₁-C₄, 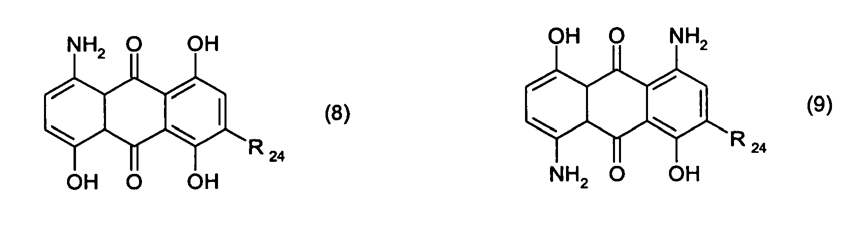 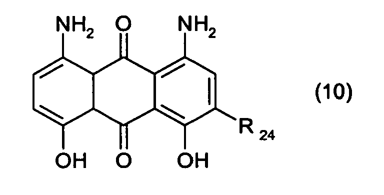 où R₂₄ représente un atome d'halogène, 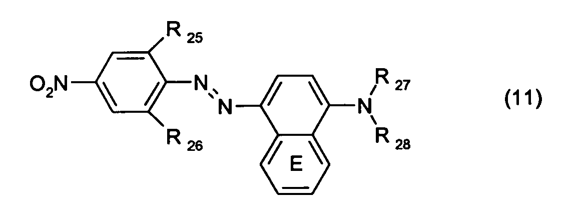 où
R₂₅ représente un groupement cyano, nitro ou un atome d'halogène, R₂₆ représente un atome d'halogène, R₂₇ représente un groupement alkyle en C₁-C₄ non substitué ou substitué par un groupement hydroxy et R₂₈ représente un groupement alkyle en C₁-C₄ non substitué ou substitué par un groupement hydroxy, et où le cycle naphtyle E peut être substitué plus avant,
et/ou 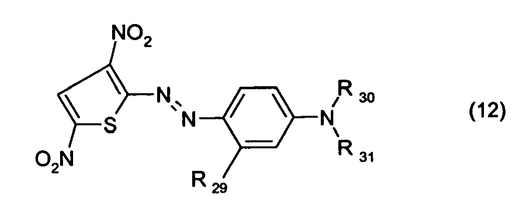 où
R₂₉ représente un groupement alkyle en C₁-C₄ ou le radical NHCOR₁₇, où R₁₇ représente un groupement alkyle en C₁-C₄, R₂₇ représente un groupement alkyle en C₁-C₄ ou un groupement (alkyle en C₁-C₄)-carbonyloxy-(alkyle en C₁-C₄) et R₃₁, représente un groupement alkyle en C₁-C₄ ou groupement (alkyle en C₁-C₄)-carbonyloxy-(alkyle en C₁-C₄).

4. Emploi des mélanges de colorants selon la Revendication 1 dans la teinture ou l'impression de matériaux fibreux hydrophobes semi-synthétiques ou synthétiques comprenant de l'acétate de cellulose.

5. Emploi des mélanges de colorants selon la Revendication 1 pour la teinture ou l'impression de structures fibreuses comprenant du polyester et/ou de l'acétate de cellulose secondaire.

6. Structures fibreuses teintes ou imprimées à l'aide d'un mélange de colorants selon la Revendication 1.
